# EUROPEAN PATENT SPECIFICATION

(11) **EP 2 728 586 B1**
(45) Date of publication and mention of the grant of the patent: **19.04.2017**
(21) Application number: 12804371.8
(22) Date of filing: 27.06.2012
(51) Int. Cl.: H01B 1/02, C22C 9/00, C22C 21/00, C22C 23/00, C22F 1/04, C22F 1/06, C22F 1/08, H01B 7/04, B22F 1/00, B22F 3/14, C22F 1/00

(54) **FLEXIBLE CONDUCTIVE MATERIAL, AND CABLE USING SAME**
FLEXIBLES LEITFÄHIGES MATERIAL UND KABEL, DAS DIESES VERWENDET
MATÉRIAU CONDUCTEUR FLEXIBLE ET CÂBLE UTILISANT LEDIT MATÉRIAU

(30) Priority: 30.06.2011 JP 2011146305
(43) Date of publication of application: 07.05.2014
(73) Proprietor: Dyden Corporation, Kurume-shi, Fukuoka 830-0051 (JP); Fukuoka Prefectural Government, Fukuoka-shi, Fukuoka 812-8577 (JP); National University Corporation Kumamoto University, Kumamoto-shi, Kumamoto 860-8555 (JP)
(72) Inventor: IN Hiroyuki, Kurume-shi Fukuoka 830-0051 (JP); ANNOU Fumiyo, Kurume-shi Fukuoka 830-0051 (JP); MATSUNAGA Daisuke, Kurume-shi Fukuoka 830-0051 (JP); KITAHARA Hiromoto, Kumamoto-shi Kumamoto 860-8555 (JP); ANDO Shinji, Kumamoto-shi Kumamoto 860-8555 (JP); TSUSHIDA Masayuki, Kumamoto-shi Kumamoto 860-8555 (JP); OGAWA Toshifumi, Kitakyushu-shi Fukuoka 807-0831 (JP)
(74) Representative: Vossius & Partner Patentanwälte Rechtsanwälte mbB
(86) International application number: PCT/JP2012/066412
(87) International publication number: WO 2013/002272

(56) References cited:
- EP-A1- 2 754 725
- JP-A- 2003 218 488
- JP-A- 2003 218 488
- JP-A- 2004 134 212
- JP-A- 2005 279 660
- JP-A- 2005 279 660
- JP-A- 2007 305 566
- JP-A- 2007 305 566
- JP-A- 2010 163 675
- US-A1- 2010 278 679

## Description

### TECHNICAL FIELD

The present invention relates to a flexible conductive material and a cable using the same, used for, for example, a lead wire particularly subject to be bent repeatedly in an area of wiring industrial robots, commercial robots, and automobiles.

### BACKGROUND ART

When a metal material, especially, a conductive wire made mainly of copper or aluminum is used for wiring an industrial robot, a commercial robot, or an automobile, the conductive wire is subject to a cyclic bending load while driving an arm or opening and closing a door. In light of this, instead of the normal conductive wire, the conductive wire resistant to the cyclic bending load is used. In addition, the conductive wire with a small diameter is more resistant to the cyclic bending load, so that a stranded cable formed of a plurality of thin wires is used rather than a solid wire.

As an example of conductive materials, for example, Patent Literature 1 discloses an aluminum alloy wire rod consisting of an aluminum alloy containing the following elements: 0.1-0.4 mass% iron, 0.1-0.3 mass% copper, 0.02-0.2 mass% magnesium, 0.02-0.2 mass% silicon, and 0.001-0.01 mass% of a combination of titanium and vanadium. The aluminum alloy wire rod has a crystal grain size of 5-25 µm in a vertical section in a wire drawing direction. A fatigue life of the aluminum alloy wire rod is 50,000 times or more provided that the aluminum alloy wire rod is subjected to a cyclic fatigue of ±0.15% strain oscillation at normal temperature.

Patent Literature 2 discloses a conductor of an electric cable for wiring, containing a copper alloy material containing 1.0 to 4.5 mass% of Ni, 0.2 to 1.1 mass% of Si, and the balance of Cu and unavoidable impurities, in which the copper alloy material has an average grain diameter of 0.2 to 5.0 µm.

### CITATION LIST

### PATENT LITERATURE

Patent Literature 1: Japanese Unexamined Patent Application Publication No. 2010-163675

### SUMMARY OF INVENTION

Patent Literature 2: Japanese Unexamined Patent Application Publication No. 2007-305566

### TECHNICAL PROBLEM

In the technique disclosed in Patent Literature 1, the fatigue life is 50,000 times or more. However, an actual robot moves 86,400 times in two days if one motion of the robot takes two seconds. For this reason, the technique disclosed in Patent Literature 1 is not sufficient. In light of this, the inventors of the present invention achieved the present invention through their earnest studies on factors affecting the fatigue life on condition that the conductive material is resistant to one million times or more of dynamic driving tests.

The present invention has been made in view of the above circumstances, and it is an object of the present invention to provide a flexible conductive material and a cable using the same, which are resistant to one million times or more of dynamic driving (e.g., cyclic bending) and particularly suitable for wiring robots or automobiles.

### SOLUTION TO PROBLEM

The present invention is as described in the appended claims.

To accomplish the above object, a first aspect of the present disclosure provides a flexible conductive material, comprising crystal grains forming a metal texture of a base material, an average crystal grain size of the crystal grains being 2 µm or less, the flexible conductive material further characterized by being resistant to one million times or more of dynamic driving tests.
As a method of setting the average crystal grain size of the crystal grains forming the metal texture of the base material 2 µm or less, the following methods can be taken: (1) a processing method such as a supercool rolling (including drawing) and a differential speed rolling; (2) a miniaturizing method, in which an alternating current and a direct current magnetic field are applied to a solidifying metal (a metal under being solidified) and thereby electromagnetic oscillations are given to the solidifying metal; (3) a method of rapid rate sintering (e.g., plasma discharge sintering, etc.) metal powders crushed to be 2 µm or less in average; (4) a method of sintering metal powders; and (5) a method of combining a process (e.g., a rotary forging work using a swaging machine) and a heat treatment.
By setting the average crystal grain size of the crystal grains forming the metal texture of the base material 2 µm or less, a lot of crystal grains can exist in the metal texture of the base material. Accordingly, when the generated cracks grow, the cracks can frequently come into collision with the crystal grains. By this, each growth direction of the cracks is changed. At the same time, divarications of the cracks are promoted, thereby reducing a growth rate of the cracks and improving a flexibility of the metal texture of the base material.

To accomplish the above object, a second aspect of the present invention provides a flexible conductive material according to claim 1.
By setting the average crystal grain size of the crystal grains forming the metal texture of the base material 2 µm or less, a lot of crystal grains can exist in the metal texture of the base material. Accordingly, when the generated cracks grow, the cracks can frequently come into collision with the crystal grains. By this, each of the growth directions of the cracks is changed. At the same time, the divarications of the cracks are promoted, thereby reducing the growth rate of the cracks and improving the flexibility of the metal texture of the base material. Furthermore, by performing a texture control to set the 1-µm or less crystal grains at least 20 % or more in the cross sectional ratio, the number of the crystal grains in the metal texture of the base material can be further increased. As a result, when the generated cracks grow, the cracks can notably come into collision with the crystal grains, and the changes in the growth directions of the cracks and the divarications of the cracks occur frequently.

In the flexible conductive material according to the first aspect of the present disclosure, the flexible conductive material includes 0.1 mass% to 20 mass% of nanoparticles.
The crack stops every time when the crack comes into collision with the nanoparticle, thus the growth rate of the crack can be decreased. Here, if the contained amount of the nanoparticles is less than 0.1 mass%, the number of the nanoparticles is decreased and the crack less frequently comes into collision with the nanoparticle, thereby the crack dpes not stop notably. On the other hand, if the contained amount of the nanoparticles exceeds 20 mass%, a lot of the nanoparticles exist in the grain boundaries and the strength of the conductive material is decreased, which is not preferable.

In the flexible conductive material according to the first and the second aspects , it is possible that the flexible conductive material includes 0.1 mass% to 20 mass% of spherical nanoparticles.
The spherical nanoparticles can prevent a particular stress concentrated part from being generated around the nanoparticles.

Now, the nanoparticle is referred to as a particle having a grain size in a range from 1 nm to 999 nm.
In addition, the nanoparticles exist in the grain boundaries of the particles forming the main metal texture of the conductive material, inside the particles, or in the grain boundaries and inside the particles. To disperse the nanoparticles in the grain boundaries, inside the particles, or in the grain boundaries and inside the particles, the following methods can be taken: (1) a method of dissolving the nanoparticles in a metal and precipitating the nanoparticles inside the particles or in the grain boundaries when the metal is solidified; (2) a method of mixing the nanoparticles with a dissolved metal in advance, solidifying the metal while stirring (e.g., magnetic stirring), and forcibly dispersing the nanoparticles in the grain boundaries; (3) a method of rapid sintering a mixed powders in which the nanoparticles are dispersed uniformly in metal powders of 2 µm or less in average, and allowing the nanoparticles to exist between the metal powders (grain boundaries); and (4) a method of adding an element forming a compound with a metal to the dissolved metal and precipitating the nanoparticles inside the particles, in the grain boundaries and inside the particles and in the grain boundaries as nanosized compounds when the metal is solidified.

In the flexible conductive material according to the first aspect
of the present disclosure, the base material is made of any of copper, aluminium, and magnesium.

In the flexible conductive material according to the first aspect
of the present disclosure, the nanoparticles are any one of fullerenes, silicon nanoparticles, transition metal nanoparticles, compound nanoparticles consisting of compounds with the base material, oxide nanoparticles consisting of oxides of the base material, and nitride nanoparticles consisting of nitrides of the base material.

To accomplish the above object, a third aspect of the present invention provides a cable characterized by using the flexible conductive material according to
the second aspect of the present invention.

### ADVANTAGEOUS EFFECTS OF INVENTION

Since the flexible conductive material according to the first and the second aspects of the present disclosure is resistant to one million times or more of the dynamic driving tests, the flexible conductive material is applicable to electric wires or cables used for purposes subject to a cyclic load such as a cyclic bending (e.g., robots or automobiles). As a result, breaking of the wires or cables in use can be prevented, thereby improving reliability of devices and reducing burdens in maintenances of the devices.

If the flexible conductive material according to the first and the second aspects of the present disclosure includes 0.1 mass% to 20 mass% of the nanoparticles, when the cracks generated due to the cyclic load passing along the grain boundaries, tips of the cracks are pinned by the nanoparticles to stop the growth of the cracks or to decrease the growth rate of the cracks. Thus, a period for the conductive material to be broken (a life of the conductive material) is prolonged (i.e., a flexibility of the conductive material is improved).
In addition, in a case of the spherical nanoparticles, a particular stress concentrated part can be prevented from being generated around the nanoparticle. Thus, the period for the conductive material to be broken can be further prolonged (i.e., the flexibility of the conductive material is further improved).

In the flexible conductive material according to the first and the second aspects of the present disclosure, if the base material is made of copper or aluminium, an electrical conductivity of the conductive material can be improved. This makes it possible to provide lead wires and cables with good electrical conductivities.
In addition, if the base material is made of magnesium, the electrical conductivity is inferior to copper and aluminium but the material can be lightened drastically. As a result, it is possible to manufacture superiorly flexible and lightweight lead wires and cables.

In the flexible conductive material according to the first and the second aspects of the present disclosure, if the nanoparticles are any one of fullerenes, silicon nanoparticles, transition metal nanoparticles, compound nanoparticles consisting of compounds of the base material, oxide nanoparticles consisting of oxides of the base material, and nitride nanoparticles consisting of nitrides of the base material, the optimal nanoparticles can be dispersed in accordance with characteristics and purposes.

Since the cable according to the third aspect of the present invention uses the flexible conductive material according to the second aspect of the present invention, the cable with a superior flexibility can be manufactured. This can prevent the cable from being cut off while the cable is in use, improving reliability of devices and reducing burdens in maintenances of the devices.

### BRIEF DESCRIPTION OF DRAWINGS

FIG. 1(A) is an explanatory diagram showing a texture of a flexible conductive material forming a wire composing a cable according to a first embodiment of the present invention.
FIG. 1(B) is an explanatory diagram showing the texture when a metal texture of a base material forming the wire is composed of a coarse crystal grain.
FIG. 2(A) is an explanatory diagram of showing a texture of a flexible conductive material forming a wire composing a cable according to a second embodiment of the present invention.
FIG. 2(B) is an explanatory diagram showing the texture when a metal texture of a base material forming the wire having a very low nanoparticle content.
FIG. 2(C) is an explanatory diagram showing the texture when the metal texture of the base material forming the wire having an overmuch nanoparticle content.

### DESCRIPTION OF EMBODIMENTS

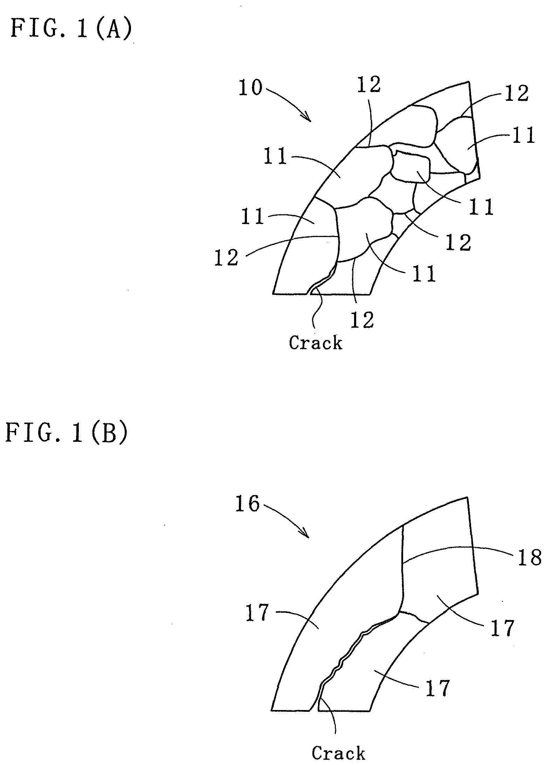

Referring to the accompanying drawings, embodiments of the present invention will be described.
A cable according to a first embodiment of the present invention is formed by a flexible conductive material resistant to one million times or more of cable flex tests (an example of dynamic driving tests). As shown in FIG. 1(A), a wire 10 forming the cable includes crystal grains 11 forming a metal texture of a base material, in which an average crystal grain size of the crystal grains 11 is 2 µm or less. Also, the base material is made of any of copper, aluminum, and magnesium. When the base material is made of copper or aluminum, conductivity (electric conductance) of the wire 10 can be improved, which makes it possible to manufacture a lead wire or a cable having superior conductivity. If the base material is made of magnesium, the conductivity of the wire 10 is lowered in comparison with copper or aluminum but a weight of the material can be reduced dramatically, which makes it possible to manufacture a lead wire or a cable being superiorly flexible and lightweight. In the cable flex test, for example, a cable having a 0.2-mm² cross section formed of wires with wire diameters of 80 µm is used as a specimen. The cable flex test is conducted by cyclically bending the specimen with side to side, in which the specimen is loaded with a 100-g load, a bending radius is 15 mm, and a bending angle is in a range of ±90 degrees.

While the cable flex test is conducted, if a crack is generated on a surface of the wire 10 (to which the maximum cyclic bending stress is loaded), the crack grows mainly along a grain boundary 12 between the crystal grains 11 forming the wire 10. Thus, every time when the crack growing along the grain boundary 12 comes into collision with the crystal grain 11, a growing direction of the crack is changed. When a crack moves in a certain direction by a certain distance from one point in the surface of the wire 10, an average crack growth rate (e.g., an average crack growth rate of a crack when the crack passes across the surface of the wire 10 from one point to another opposing point on the surface of the wire 10) becomes superficially slow. Furthermore, if the crack comes into collision with the crystal grain 11 and diverges from the crystal grain 11, a crack growth energy working on a tip of the crack is decreased and thereby the growth rate of the crack is decreased.

In light of this, when the crystal grains 11 forming the main metal texture of the conductive material of the wire 10 has an average crystal grain size of 2 µm or less, a collision of the crack with the crystal grains 11 can stimulate the change in the crack growth direction and the divarication of the crack while a strength of the wire 10 (base material) is maintained. As a result, if the crack is generated on the wire 10, a length of time until the wire 10 is split by the crack becomes long and the number of cycles to fracture of the cable in the cable flex tests is increased.

Now, it is preferable that the average crystal grain size of the crystal grains 11 is 2 µm or less as well as a texture control is taken in a way that at least 20% or more in a cross sectional ratio of the 1-µm or less crystal grains 11 are included. By this, the collision of the crack with the crystal grains 11 can be caused remarkably, which allows frequent occurrences of the growth direction change of the crack and the divarication of the crack. As a result, the number of cycles to fracture of the cable in the cable flex tests is further increased.

As shown in FIG. 1(B), if a wire 16 is formed by coarse crystal grains 17 (e.g., crystal grain size is 8 µm or more), the conductivity of the wire 16 is advantageously improved. However, a strength of the base material is strongly dominated by a strength of a grain boundary 18, decreasing the strength of the base material. In addition, the frequency of the collision between the crack and the coarse crystal grains 17 is reduced and thereby the frequency of the divarication of the crack is also reduced. As a result, the number of cycles to fracture of the cable in the cable flex tests is decreased. Therefore, it is not preferable to manufacture the wire 16 using the conductive material formed by the coarse crystal grains 17.

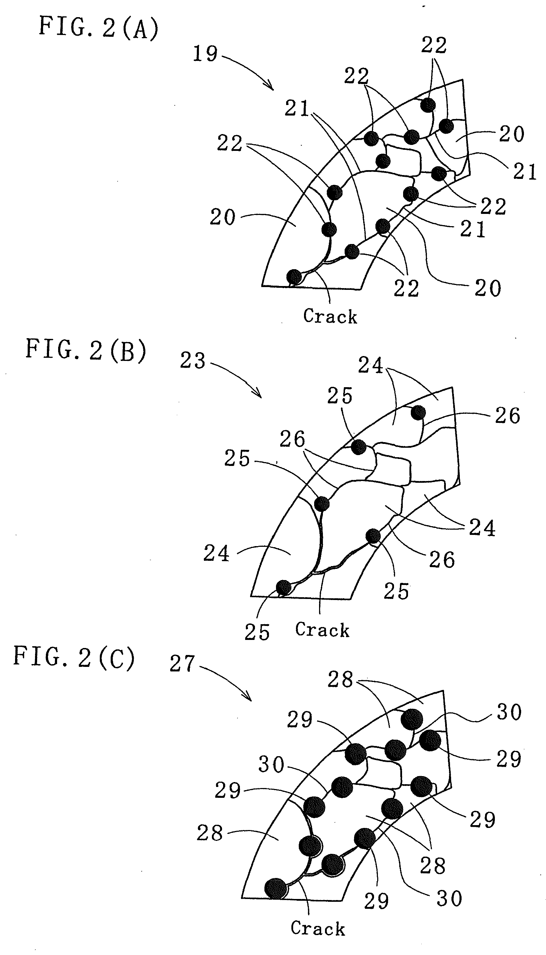

A cable according to a second embodiment of the present invention is formed by a conductive material resistant to one million times or more of cable flex tests. As shown in FIG. 2(A), a wire 19 forming the cable includes crystal grains 20 having an average crystal grain size of 2 µm or less. The crystal grains 20 form a metal texture of a base material. In the metal texture (i.e., a grain boundary 21 between the crystal grains 20 forming the metal texture), nanoparticles 22 (with grain sizes of 1-999 nm) are diverged. Here, the base material is made of any of copper, aluminum, and magnesium.

The crack of the wire 19 generated in the cable flex test grows mainly along the grain boundary 21 between the crystal grains 20 forming the wire 19. If the nanoparticle 22 exists on the grain boundary 21, the crack growing along grain boundary 21 comes into collision with the nanoparticle 22. The growth of the crack stops every time when the crack comes into collision with the nanoparticle 22. In order to make a further growth of the crack collided with the nanoparticle 22, it is necessary for the crack to detour the nanoparticle 22 (i.e., to move along a boundary between the nanoparticle 22 and the crystal grain 20) and to reach the grain boundary 21 again. Therefore, if the nanoparticles 22 exist on the grain boundaries 21, an average crack growth rate of the cracks moving in a certain direction by a certain distance from one point on the surface of the wire 19 (e.g., an average crack growth rate of the cracks moving across the wire 19 from one point on one surface of the wire 19 to an opposing point on the other surface of the wire 19) becomes very slow superficially. As a result, if the crack is generated on the wire 19, a length of time until the wire 19 is split by the crack becomes long, and the number of cycles to fracture of the cable is further increased in the cable flex tests.

Now, if the nanoparticle 22 has a spherical shape, a particular stress concentrated part can be prevented from being generated around the nanoparticle 22 and thus the crack can certainly grow along the surface of the nanoparticle 22. By this, a length of time until the conductive material is broken can be further prolonged (i.e., a flex resistance of the conductive material is improved).

In addition, a contained amount of the nanoparticles 22 is 0.1 mass% to 20 mass%. Also, the nanoparticle 22 is any one of the followings: fullerene; silicon nanoparticle; transition metal nanoparticles (e.g., metallic nanoparticle such as gold, silver, copper, and iron); compound nanoparticle consisting of compound of the base material (e.g., intermetallic compound); oxide nanoparticle consisting of oxide of the base material (e.g., if the base material is aluminum, nanoparticle of Al₂O₃ is added); and nitride nanoparticle consisting of nitride of the base material (e.g., if the base material is aluminum, nanoparticle of AlN is added). Furthermore, a carbon nanotube can be used as the nanoparticle.

As shown in FIG. 2(B), even when an average grain size of crystal grains 24 forming a metal texture of a base material of a wire 23 is 2 µm or less as well as a texture control is taken in a way that at least 20% or more in a cross sectional ratio of the 1-µm or less crystal grains are included, if a contained amount of nanoparticles 25 is too small (i.e., the contained amount is less than 0.1 mass%), then the nanoparticles 25 less frequently exist on grain boundaries 26. Accordingly, the growth of the crack generated due to the collision of the crack growing along the grain boundaries 26 with the nanoparticle 25 stops less frequently. Therefore, even with the existence of the nanoparticle 25, a growth rate of the crack cannot be decreased effectively.

Also, as shown in FIG. 2(C), even when an average grain size of crystal grains 28 forming a metal texture of a base material of a wire 27 is 2 µm or less as well as a texture control is taken in a way that at least 20% or more in a cross sectional ratio of the 1-µm or less crystal grains are included, if the contained amount of nanoparticles 29 is too much (i.e., the contained amount is more than 20 mass%), then a grain size of a nanoparticle 29 existing on a grain boundary 30 is increased. At the same time, the nanoparticle 29 more frequently exists on the grain boundary 30 and a strength of the grain boundary 30 is decreased, and thus the crack can easily grow on the grain boundary 30. Therefore, a growth rate of the crack is increased and the number of cycles to fracture of the cable in the cable flex tests is decreased.

Hereinafter, a description will be given on experimental examples for confirming functional effects of the present invention.

### (Experimental Examples 1-4)

A formulation containing 0.6 mass% of magnesium, 0.3 mass% of silicon, 0.05 mass% of iron and further containing, as a rest part, aluminum and unavoidable impure substances was dissolved. After that, a solution treatment was performed at 520°C and an aging treatment was performed at 175°C for eight hours, thereby an aluminum system conductive material block was produced. Next, from the conductive material block, four wire rods of 10 mm diameter were produced by a cutting work. Using a swaging machine, a rotary forging work was performed to process the wire rods into a wire rod of 5 mm diameter (one rod), wire rods of 2 mm diameter (two rods), and a wire rod of 1.5 mm diameter (one rod). Each of the processed wire rods were heat treated in a heat treat furnace. At the moment, a recrystallization temperature of the wire rod was calculated in advance using a thermal decomposition device (pyrolytic equipment). The heat treatments of each of the wire rods were performed for 2-40 hours in argon atmosphere at a temperature lower than the calculated recrystallization temperature by 50°C. After the heat treatments, each of the naturally-cooled wire rods were cold-worked and processed into drawn wire materials of 80 µm diameter through a die wire drawing work.

Texture observations of the drawn wire materials found out the followings: an average crystal grain size of crystal grains forming a metal texture was 1 µm in a case where the wire rod of the 1.5 mm diameter was heat-treated for two hours; an average crystal grain size of crystal grains forming a metal texture was 2 µm in a case where the wire rod of the 2 mm diameter was heat-treated for eight hours; an average crystal grain size of crystal grains forming a metal texture was 3 µm in a case where the wire rod of the 2 mm diameter was heat-treated for 16 hours; and an average crystal grain size of crystal grains forming a metal texture was 8 µm in a case where the wire rod of the 5 mm diameter was heat-treated for 40 hours. In addition, each of the drawn wire materials having the average crystal grain size of 1 µm, 2 µm, or 3 µm contained 50%, 20%, and 20% in a cross sectional ratio of the 1-µm or less crystal grains, respectively. The drawn wire material having the average crystal grain size of 8 µm contained 0% in a cross sectional ratio of the 1-µm or less crystal grains. Furthermore, in each of the drawn wire materials, 0.3 mass% of β double prime habit having a grain size of 10-100 nm existed as a nanoparticle.

Then, conductivities of the obtained drawn wire materials were measured. Also, using the drawn wire materials as wires, a cable having a cross section of 0.2 mm² was manufactured and this cable was used as a specimen. In a way that the cable was subject to a 100-g load, cable flex tests were conducted by cyclically bending the cable side to side with a bending radius of 15 mm and a bending angle being in a range of ±90 degrees. Table 1 shows the conductivities and the results of the cable flex tests.

**[Table 1]**

| Experimental example | Main material | Average crystal grain size (µm) | Cross sectional ratio of 1-µm or less crystal grain (%) | Mass percent of nanoparticle (%) | Number of cycles to fracture of cables (million times) | Conductivity (%IACS) |
|---|---|---|---|---|---|---|
| 1 | aluminum | 2 | 20 | 0.30 | 1.20 | 53 |
| 2* | Aluminum | 8 | 0 | 0.30 | 0.10 | 53 |
| 3* | Aluminum | 3 | 20 | 0.34 | 0.85 | 53 |
| 4 | Aluminum | 1 | 50 | 0.30 | 5.00 | 53 |
| 5* | Aluminum | 2 | 0 | 0.30 | 1.10 | 53 |
| 6 | Aluminum | 2 | 50 | 0.30 | 1.30 | 53 |
| 7* | Aluminum | 2 | 0 | 0.00 | 1.00 | 53 |
| 8 | Aluminum | 2 | 20 | 0.05 | 1.10 | 54 |
| 9 | Aluminum | 2 | 20 | 7.00 | 1.30 | 40 |
| 10 | Aluminum | 2 | 20 | 20.00 | 1.50 | 45 |
| 11* | Copper | 2 | 0 | 0.00 | 2.00 | 100 |
| 12 | Copper | 2 | 20 | 0.30 | 3.00 | 70 |
| 13* | Copper | 8 | 0 | 0.30 | 0.80 | 70 |
| 14* | Magnesium | 2 | 0 | 0.00 | 1.00 | 38 |
| 15 | Magnesium | 2 | 20 | 0.30 | 1.30 | 30 |
| 16* | Magnesium | 8 | 0 | 0.30 | 0.05 | 30 |

| | | | | | | |
|---|---|---|---|---|---|---|
| * Reference Example | | | | | | |

The conductivity of each of the drawn wire materials was 53%IACS. Also, the number of breakages in the cable flex tests was as follows: one million and two hundred thousand (1,200,000) times in Experimental Example 1 (when the average crystal grain size was 2 µm, the cross sectional ratio of the 1-µm or less crystal grains was 20%, and the contained amount of the nanoparticles was 0.3 mass%); and 850 thousand (850,000) times in Experimental Example 3 (when the average crystal grain size was 3 µm, the cross sectional ratio of the 1-µm or less crystal grains was 20%, and the contained amount of the nanoparticles was 0.3 mass%). In short, when the average crystal grain size of the crystal grains of the drawn wire material was 2 µm or less, the cable was resistant to one million times or more of the cable flex tests. Furthermore, in Experimental Example 4 (when the average crystal grain size was 1 µm, the cross sectional ratio of the 1-µm or less crystal grains was 50%, and the contained amount of the nanoparticles was 0.3 mass%), the number of breakages in the cable flex tests was five million times. Thus, as the average crystal grain size becomes smaller and the rate of the contained amount of the 1-µm or less crystal grains becomes higher, the number of breakages in the cable flex tests increased more.

### (Experimental Examples 5-8)

A formulation containing 0.6 mass% of magnesium, 0.3 mass% of silicon, 0.05 mass% of iron and further containing, as a rest part, aluminum and unavoidable impure substances was dissolved. After that, a solution treatment was performed at 520°C, thereby an aluminum system conductive material block (hereinafter referred to as Block 0) was produced. Also, a solution treatment was performed at 520°C and an aging treatment was performed at 175°C for one hour and for eight hours respectively, thereby aluminum system conductive material blocks (hereinafter referred -to as Block 1 and Block 8, respectively) were produced. Next, respectively from Block 0 and Block 8, wire rods of 10 mm diameter were produced by a cutting work. Using a swaging machine, a rotary forging work was performed to process the wire rods into wire materials with 5 mm diameter. In a similar way, from Block 1, a wire rod of 10 mm diameter was produced and processed into a wire material with 2 mm diameter using the swaging machine. From Block 8, a wire rod of 10 mm diameter was produced and processed into a wire material with 1.5 mm diameter using the swaging machine. Each of the processed wire rods was heat treated in a heat treat furnace. At the moment, a recrystallization temperature of the wire rod was calculated in advance using a thermal decomposition device. The heat treatments of each of the wire rods were performed in argon atmosphere for 12 hours at a temperature lower than the calculated recrystallization temperature by 50°C. After the heat treatments, each of the naturally-cooled wire rods was cold-worked and processed into drawn wire materials of 80 µm diameter through a die wire drawing work.

Texture observations of the drawn wire materials found that an average crystal grain size of crystal grains forming a metal texture was 2 µm. Also, the rate (the cross sectional ratio) of the 1-µm or less crystal grains in each of the drawn wire materials was as follows: 0% when the rotary forging work was performed to process the wire rod into the wire material with 5 mm diameter using the swaging machine; 20% when the rotary forging work was performed to process the wire rod into the wire material with 2 mm diameter using the swaging machine; and 50% when the rotary forging work was performed to process the wire rod into the wire material with 1.5 mm diameter using the swaging machine. Furthermore, in each of the drawn wire materials, β double prime habit having a grain size of 10-80 nm existed as a nanoparticle. The contained amounts of the β double prime habit were 0.05 mass% when the aging treatment was performed at 175°C for one hour and 0.3 mass% when the aging treatment was performed at 175°C for eight hours. In addition, the drawn wire material made of Block 0, which have not undertook the aging treatment at 175°C, did not include the β double prime habit.

Then, conductivities of the obtained drawn wire materials were measured. Also, using the drawn wire materials as wires, a cable having a cross section of 0.2 mm² was manufactured and the cable flex tests as the same as Experimental Examples 1-4 were conducted. Table 1 shows the conductivities and the results of the cable flex tests.
The conductivity of each of the drawn wire materials was as follows: 54%IACS when the contained amount of the nanoparticles was 0.05 mass%; and 53%IACS when the contained amount of the nanoparticles was 0.3 mass% or 0%. Also, the number of breakages in the cable flex tests was as follows: one million and ten thousand (1,100,000) times in Experimental Example 5 (when the average crystal grain size was 2 µm, the cross sectional ratio of the 1-µm or less crystal grains was 0%, and the contained amount of the nanoparticles was 0.3 mass%); and one million and thirty thousand (1,300,000) times in Experimental Example 6 (when the average crystal grain size was 2 µm, the cross sectional ratio of the 1-µm or less crystal grains was 50%, and the contained amount of the nanoparticles was 0.3 mass%). In short, when the ratio of the 1-µm or less crystal grains included in the metal texture was increased, the number of breakages in the cable flex tests was also increased. Furthermore, in Experimental Example 7 (when the average crystal grain size was 2 µm, the cross sectional ratio of the 1-µm or less crystal grains was 0%, and the contained amount of the nanoparticles was 0 mass%), the number of breakages in the cable flex tests was one million times. Thus, when 0.3 mass% of the nanoparticles was included in the metal texture, the number of breakages in the cable flex tests was increased.

### (Experimental Examples 9, 10)

7 mass% gold particles and 20 mass% gold particles with 200-nm or less diameters were added respectively to aluminum powders with 99.9% purity (100 mesh), and then a mechanical alloying treatment was performed (in which an acceleration of gravity was 20 G and a period was 7,200 seconds). Next, using a spark plasma sintering machine, each of the mechanical alloyed powders was heated at 500°C for 600 seconds under a pressurized condition of 41 MPa, thereby manufacturing rods of solidified molded materials each having a diameter of 10 mm. After that, using a swaging machine, each of the solidified molded materials with 10-mm diameter was processed into a wire material with 2-mm diameter by a rotary forging work, and each of the obtained wire materials was heat treated in a heat treat furnace. At the moment, a recrystallization temperature of the solidified molded material was calculated in advance using a thermal decomposition device. The heat treatments of each of the solidified molded materials were performed for 12 hours in argon atmosphere at a temperature lower than the calculated recrystallization temperature by 50°C. After the heat treatments, each of the naturally-cooled wire materials were cold-worked and processed into drawn wire materials of 80 µm diameter through a die wire drawing work.

Texture observations of the drawn wire materials found that an average crystal grain size of crystal grains forming a metal texture was 2 µm. Also, the rate (the cross sectional ratio) of the 1-µm or less crystal grains in each of the drawn wire materials was 20%.
Then, conductivities of the obtained drawn wire materials were measured. Also, using the drawn wire materials as wires, a cable having a cross section of 0.2 mm² was manufactured and the cable flex tests as the same as Experimental Examples 1-4 were conducted. Table 1 shows the conductivities and the results of the cable flex tests.
The conductivity of each of the drawn wire materials was as follows: 40%IACS when the contained amount of the nanoparticles was 7 mass%; and 45%IACS when the contained amount of the nanoparticles was 20 mass%. Also, the number of breakages in the cable flex tests increased with a higher rate of the contained amount of the nanoparticles.

### (Experimental Examples 11-13)

0.3 mass% gold particles with 200-nm or less diameters were added to copper powders with 99.9% purity (100 mesh), and then a mechanical alloying treatment was performed (in which an acceleration of gravity was 20 G and a period was 7,200 seconds). After that, using a spark plasma sintering machine, the powders were heated at 500°C for 600 seconds under a pressurized condition of 41 MPa, thereby manufacturing rods of solidified molded materials P each having a diameter of 10 mm. In addition, the identical mechanical alloying treatment was performed only for the copper powders (the copper powders were crushed while being given an impact). Using the spark plasma sintering machine, the mechanical alloyed copper powders were heated in the same heating condition as described above, thereby manufacturing rods of solidified molded materials Q each having a diameter of 10 mm. Next, using a swaging machine, the solidified molded materials P were processed into wire materials with 2-mm diameter and with 5-mm diameter respectively by a rotary forging work, whereas the solidified molded materials Q were processed into wire materials with 5-mm diameter by the rotary forging work. Then, each of the obtained wire materials was heat treated in a heat treat furnace. At the moment, each recrystallization temperature of the solidified molded materials P and Q was calculated in advance using a thermal decomposition device. In argon atmosphere at a temperature lower than the calculated recrystallization temperature by 50°C, the solidified molded materials P were heat treated for four hours and for eighty hours respectively, and the solidified molded materials Q were heat treated for four hours. After the heat treatments, each of the naturally-cooled wire materials was cold-worked and processed into drawn wire materials of 80 µm diameter through a die wire drawing work.

Texture observations of the drawn wire materials found out the followings: when the solidified molded materials P were processed into the wire materials with 2-mm diameters by the rotary forging work using the swaging machine and then heat treated for four hours, an average crystal grain size of crystal grains forming a metal texture was 2 µm and a rate (cross sectional ratio) of 1-µm or less crystal grains was 20%; when the solidified molded materials P were processed into the wire materials with 5-mm diameters by the rotary forging work using the swaging machine and then heat treated for eighty hours, the average crystal grain size of the crystal grains forming the metal texture was 8 µm and the rate (cross sectional ratio) of the 1-µm or less crystal grains was 0%; and further when the solidified molded materials Q were processed into the wire materials with 5-mm diameters by the rotary forging work using the swaging machine and then heat treated for four hours, the average crystal grain size of the crystal grains forming the metal texture was 2 µm and the rate (cross sectional ratio) of the 1-µm or less crystal grains was 0%.

Conductivities of the obtained drawn wire materials were measured. Also, using the drawn wire materials as wires, a cable having a cross section of 0.2 mm² was manufactured and the cable flex tests as the same as Experimental Examples 1-4 were conducted. Table 1 shows the conductivities and the results of the cable flex tests.
The conductivity of the drawn wire materials made of the solidified molded materials Q was 100%IACS, whereas the conductivities of the drawn wire materials made of the solidified molded materials P and having the average crystal grain size of 2 µm and 8 µm were both 70%IACS. Also, the number of breakages in the cable flex tests was as follows: eight hundred thousand (800,000) times when the average crystal grain size was 8 µm; and more than one million times when the average crystal grain size was 2 µm.

### (Experimental Examples 14-16)

0.3 mass% gold particles with 200-nm or less diameters were added to magnesium powders with 99.9% purity (100 mesh), and then a mechanical alloying treatment was performed (in which an acceleration of gravity was 20 G and a period was 7,200 seconds). After that, using a spark plasma sintering machine, the powders were heated at 500°C for 600 seconds under a pressurized condition of 41 MPa, thereby manufacturing rods of solidified molded materials R each having a diameter of 10 mm. In addition, the identical mechanical alloying treatment was performed only for the magnesium powders (the magnesium powders were crushed while being given an impact). Using the spark plasma sintering machine, the mechanical alloyed magnesium powders were heated in the same heating condition as described above, thereby manufacturing rods of solidified molded materials S each having a diameter of 10 mm. Next, using a swaging machine, the solidified molded materials R were processed into wire materials with 2-mm diameters and with 5-mm diameters respectively by a rotary forging work, whereas the solidified molded materials S were processed into wire materials with 5-mm diameters by the rotary forging work. Then, each of the obtained wire materials was heat treated in a heat treat furnace. At the moment, each recrystallization temperature of the solidified molded materials R and S was calculated in advance using a thermal decomposition device. In argon atmosphere at a temperature lower than the calculated recrystallization temperature by 50°C, the solidified molded materials R were heat treated for three hours and for sixty hours respectively, and the solidified molded materials S were heat treated for three hours. After the heat treatments, each of the naturally-cooled wire materials were cold-worked and processed into drawn wire materials of 80 µm diameter through a die wire drawing work.

Texture observations of the drawn wire materials found out the followings: when the solidified molded materials R were processed into the wire materials with 2-mm diameters by the rotary forging work using the swaging machine and then heat treated for three hours, an average crystal grain size of crystal grains forming a metal texture was 2 µm and a rate (cross sectional ratio) of 1-µm or less crystal grains was 20%; when the solidified molded materials R were processed into the wire materials with 5-mm diameters by the rotary forging work using the swaging machine and then heat treated for sixty hours, the average crystal grain size of the crystal grains forming the metal texture was 8 µm and the rate (cross sectional ratio) of the 1-µm or less crystal grains was 0%; and further when the solidified molded materials S were processed into the wire materials with 5-mm diameters by the rotary forging work using the swaging machine and then heat treated for three hours, the average crystal grain size of the crystal grains forming the metal texture was 2 µm and the rate (cross sectional ratio) of the 1-µm or less crystal grains was 0%.

Conductivities of the obtained drawn wire materials were measured. Also, using the drawn wire materials as wires, a cable having a cross section of 0.2 mm² was manufactured and the cable flex tests as the same as Experimental Examples 1-4 were conducted. Table 1 shows the conductivities and the results of the cable flex tests.
The conductivity of the drawn wire materials made of the solidified molded materials S was 38%IACS, whereas the conductivities of the drawn wire materials made of the solidified molded materials R and having the average crystal grain size of 2 µm and 8 µm were both 30%IACS. Also, the number of breakages in the cable flex tests was as follows: fifty thousand (50,000) times when the average crystal grain size was 8 µm; and more than one million times when the average crystal grain size was 2 µm.

The present invention is not limited to the above-described embodiments, but can include modifications within a scope of the present invention.

### INDUSTRIAL APPLICABILITY

The flexible conductive material and the cable using the same according to the present invention are resistant to one million times or more of the dynamic driving tests. Thus, the conductive material and the cable using the same according to the present invention are suitable for purposes subject to cyclic bending, for example, electric wires and cables used for devices such as robots and automobiles including driving members, thereby improving reliability of the devices and reducing burdens in maintenances of the devices. As a result, operation rates of the devices can be improved and running costs of the devices can be cut down.

### REFERENCE SIGNS LIST

10: wire, 11: crystal grain, 12: grain boundary, 16: wire, 17: coarse crystal grain, 18: grain boundary, 19: wire, 20: crystal grain, 21: grain boundary, 22: nanoparticle, 23: wire, 24: crystal grain, 25: nanoparticle, 26: grain boundary, 27: wire, 28: crystal grain, 29: nanoparticle, 30: grain boundary

## Claims

1. A flexible conductive material comprising crystal grains forming a metal texture of a base material, wherein the base material is made of any of copper, aluminium, and magnesium, wherein an average crystal grain size of the crystal grains is set to 2 µm or less, and the crystal grain size of 20% or more of the crystal grains in a cross section of the flexible conductive material is set to 1 µm or less, wherein the flexible conductive material further comprises 0.1 mass% to 20 mass% of nanoparticles and is **characterized by** being resistant to one million times or more of dynamic driving tests, wherein the nanoparticles are any one of fullerenes, silicon nanoparticles, transition metal nanoparticles, compound nanoparticles consisting of compounds with the base material, oxide nanoparticles consisting of oxides of the base material, and nitride nanoparticles consisting of nitrides of the base material.

2. The flexible conductive material as defined in claim 1, wherein the nanoparticles are spherical in shape.

3. A cable **characterized by** using the flexible conductive material as defined in claim 1 or 2.

## Patentansprüche

1. Ein flexibles leitfähiges Material, umfassend Kristallkörner, die eine Metalltextur eines Basismaterials bilden, wobei das Basismaterial aus einem von Kupfer, Aluminium und Magnesium hergestellt ist, wobei eine mittlere Kristallkorngröße der Kristallkörner auf 2 µm oder weniger eingestellt ist, und die Kristallkorngröße von 20% oder mehr der Kristallkörner in einem Querschnitt des flexiblen leitfähigen Materials auf 1 µm oder weniger eingestellt ist, wobei das flexible leitfähige Material ferner 0,1 Massen-% bis 20 Massen-% an Nanopartikeln umfasst und **dadurch gekennzeichnet ist, dass** es in einer Million oder mehr dynamischen Bewegungstests beständig ist, wobei die Nanopartikel eines aus Fullerenen, Siliziuinnanopartikeln, Übergangsmetallnanopartikeln, zusammengesetzten Nanopartikeln, die aus Verbindungen mit dem Basismaterial bestehen, Oxidnanopartikeln, die aus Oxiden des Basismaterials bestehen, und Nitridnanopartikeln, die aus Nitriden des Basismaterials bestehen, sind.

2. Das flexible leitfähige Material nach Anspruch 1, wobei die Nanopartikel kugelförmig sind.

3. Ein Kabel, **gekennzeichnet durch** die Verwendung des flexiblen leitfähigen Materials nach Anspruch 1 oder 2.

## Revendications

1. Matériau conducteur flexible comprenant des grains cristallins formant une texture métallique d'un matériau de base, dans lequel le matériau de base est fabriqué à partir de l'un quelconque du cuivre, de l'aluminium et du magnésium, dans lequel une taille moyenne des grains cristallins est fixée à 2 µm ou moins, et la taille des grains cristallins de 20 % ou plus des grains cristallins dans une section transversale du matériau conducteur flexible est fixée à 1 µm ou moins, dans lequel le matériau conducteur flexible comprend en outre de 0,1 % en masse à 20 % en masse de nanoparticules et est **caractérisé par le fait qu'**il est résistant à un million de fois ou plus de tests de capacités dynamiques, dans lequel les nanoparticules sont l'un quelconque des fullerènes, des nanoparticules de silicium, des nanoparticules de métaux de transition, des nanoparticules de composés constituées de composés avec le matériau de base, des nanoparticules d'oxydes constituées d'oxydes du matériau de base, et des nanoparticules de nitrure constituées de nitrures du matériau de base.

2. Matériau conducteur flexible selon la revendication 1, dans lequel les nanoparticules sont de forme sphérique.

3. Câble **caractérisé par** l'utilisation du matériau conducteur flexible selon la revendication 1 ou 2.
